(19) Europäisches Patentamt
European Patent Office
Office européen des brevets

(11) **EP 2 882 124 A1**

(12) **EUROPEAN PATENT APPLICATION**
published in accordance with Art. 153(4) EPC

(43) Date of publication:
**10.06.2015 Bulletin 2015/24**

(51) Int Cl.:
*H04J 99/00* (2009.01)      *H04B 7/04* (2006.01)
*H04W 16/28* (2009.01)      *H04W 28/04* (2009.01)

(21) Application number: **13826115.1**

(22) Date of filing: **09.04.2013**

(86) International application number:
**PCT/JP2013/002414**

(87) International publication number:
**WO 2014/020798 (06.02.2014 Gazette 2014/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **31.07.2012   JP 2012169094**

(71) Applicant: **NEC Corporation**
**Tokyo 108-8001 (JP)**

(72) Inventor: **OKETANI, Kengo**
**Tokyo 108-8001 (JP)**

(74) Representative: **MacDougall, Alan John Shaw et al**
**Mathys & Squire LLP**
**The Shard**
**32 London Bridge Street**
**London SE1 9SG (GB)**

(54) **WIRELESS COMMUNICATION APPARATUS, AND HARQ RESPONSE TRANSMITTING METHOD AND RECEIVING METHOD**

(57)    The quality of the transmission of HARQ-ACK/NACKs has to be higher in a MIMO multilayer communication system. In one embodiment, a wireless communication apparatus (10) includes a wireless communication unit (11) and a signal processing unit (12). The wireless communication unit (11) is configured to transmit plural multiple-input multiple-output (MIMO) layers using multiple antennas. The signal processing unit 12 is configured to map hybrid automatic repeat request (HARQ) responses onto some layers of the MIMO layers with a relatively high modulation and coding scheme (MCS), so that the HARQ responses are transmitted using only the some layers with a relatively high MCS.

Fig. 6                    <u>10</u>

EP 2 882 124 A1

## Description

## Technical Field

The present invention relates to transmission and reception of hybrid automatic repeat request (HARQ) responses in a wireless communication system.

## Background Art

In uplink communication of the Long-Term Evolution (LTE), user data is typically transmitted on the Physical Uplink Shared Channel (PUSCH). On the other hand, control information about downlink communication (feedback control information) is transmitted on the Physical Uplink Control Channel (PUCCH). The feedback control information includes, for example, channel quality information (CQI), which indicates the state of the downlink propagation path measured by a mobile terminal; a rank indicator (RI); and an HARQ response. An HARQ response represents the result of a cyclic redundancy check (CRC) performed on downlinked data, and indicates the form of an HARQ-ACK or HARQ-NACK.

However, if transmission of the feedback control information and transmission of the user data are scheduled in the same subframe, a problem occurs when these types of information are transmitted on different physical channels. For example, if uplink user data using the PUSCH and control information using the PUCCH are independently at the same time transmitted in the same subframe respectively, the peak to average power ratio (PAPR) of the transmission signal increases. Generally, an increase of PAPR significantly reduces the operation efficiency of a power amplifier of such as a mobile phone which has large power consumption. Accordingly, an increase in PAPR should be controlled.

In the 3rd Generation Partnership Project (3GPP) Releases 8 and 9, it is not specified that the PUSCH and PUCCH are transmitted in the same subframe at the same time. That is, according to Releases 8 and 9, when uplink user data and feedback control information are scheduled in the same subframe for a mobile terminal, the feedback control information is multiplexed with the user data, and then is transmitted onto the single physical channel which is mapped such as PUSCH.

And the 3GPP Release 10 defines a mode which transmits the PUSCH and PUCCH in the in the same subframe at the same time independently. However, transmitting in this mode a problem of increasing the PAPR described above is occurred, and generally this mode is usually applied only to a small number of users which are adjacent to a base station. For many users in the other areas, same as in Releases 8 and 9, a mode in which control information is multiplexed with user data and then transmitted by the PUSCH, (that is, a mode to reduce the PAPR) is usually applied to them.

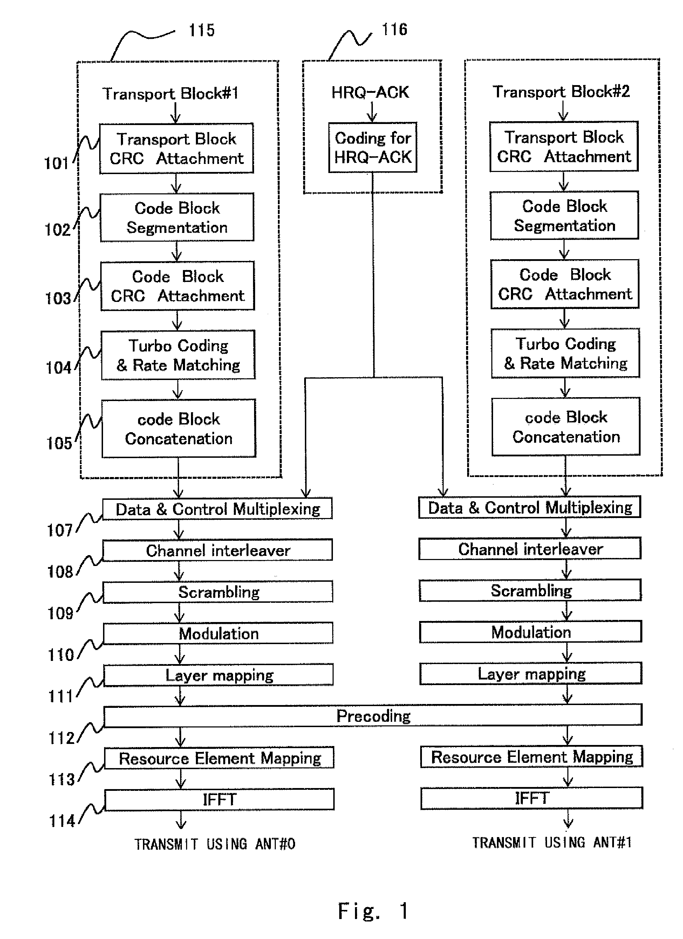

Described below are details of the channel coding method of the 3GPP Release 10, a method for time-multiplexing user data and feedback control information into the same subframe using a multilayer transmission by uplink multiple-input multiple-output (MIMO), and problems therewith. Fig. 1 is a flowchart showing a transmission signal generation process based on the 3GPP Release 10 specification. In Fig. 1, it is assumed that one user will transmit two transport blocks (two layers) using two antennas and that user data 115 and HARQ-ACK/NACKs will be multiplexed.

The following is a description of the operation overview of the transmission signal generation processing units. In transport block CRC attachment 101, a cyclic redundancy check (CRC) is attached to each transmission data (transport block) passed from a higher level. In code block segmentation 102, each CRC-attached transport block is segmented so that the number of bits input to a subsequent turbo encoder is 6144 or less. (The resulting blocks will be hereafter referred to as code blocks.) Note that if the size of any CRC-attached transport block is 6144 bits or less, the transport block does not need to be segmented and itself is served as a code block.

In code block CRC attachment 103, a CRC is attached to each code block. In turbo coding & rate matching 104, each CRC-attached code block is turbo-coded and subjected to rate matching for adjusting the code rate. In code block concatenation 105, the turbo-coded, and rate-matched code blocks are combined (concatenated) into one. In coding for HARQ-ACK 106, coding for HARQ-ACK/NACK is performed. In data & control multiplexing 107, the feedback control information (in this case, HARQ-ACK/NACKs) generated by a control information unit 116 and the code block-concatenated user data generated by a user data unit 115 are multiplexed. In channel interleaver 108, the data sequence in which the feedback control information and user data are multiplexed is interleaved to change the data order. In scrambling 109, the channel-interleaved data sequence is multiplied by a scrambling sequence.

In modulation 110, the scrambled data sequence is modulated (QPSK, 16QAM, 64QAM) to generate a modulation symbol sequence. In layer mapping 111, the modulated symbol sequence is mapped to the number of sequences corresponding to the number of transmission layers. As used herein, the term "layer" refers to a unit signal sequence which can be transmitted in a spatially multiplexed manner by MIMO, and at least two layers are used. In precoding 112, the symbol sequence is precoded for each transmission layer by multiplying it by a precoding matrix.

In resource element mapping 113, the precoded symbol sequences are mapped to a resource element allocated to the user. In IFFT 114, the symbol sequences mapped to the resource elements are subjected to inverse fast Fourier transformation (IFFT) to convert the frequency domain signal into a time domain signal. The resulting time domain signal sequences are mapped onto the data symbol section of the PUSCH and then transmitted.

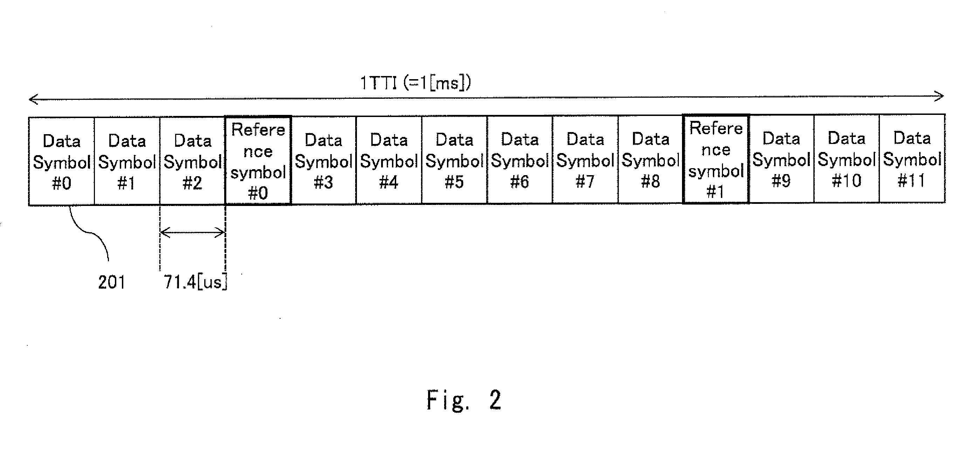

Fig. 2 shows a subframe format when using the normal CP (cyclic prefix) of the PUSCH defined in the 3GPP LTE. The subframe is 1 ms long and includes 14 SC-FDMA symbols 201. In PUSCH transmission, two types of symbols are used: data symbol and reference symbol. Data symbols are a field to which user data is mapped, and 12 symbol times in the subframe are allocated to the data symbols. A reference symbols are a field to which a known reference sequences are mapped on both the transmitting and receiving sides, and 2 symbol times in the subframe are allocated to reference symbols. The reference symbols are used, for example, to estimate the propagation path on the receiving side (base station).

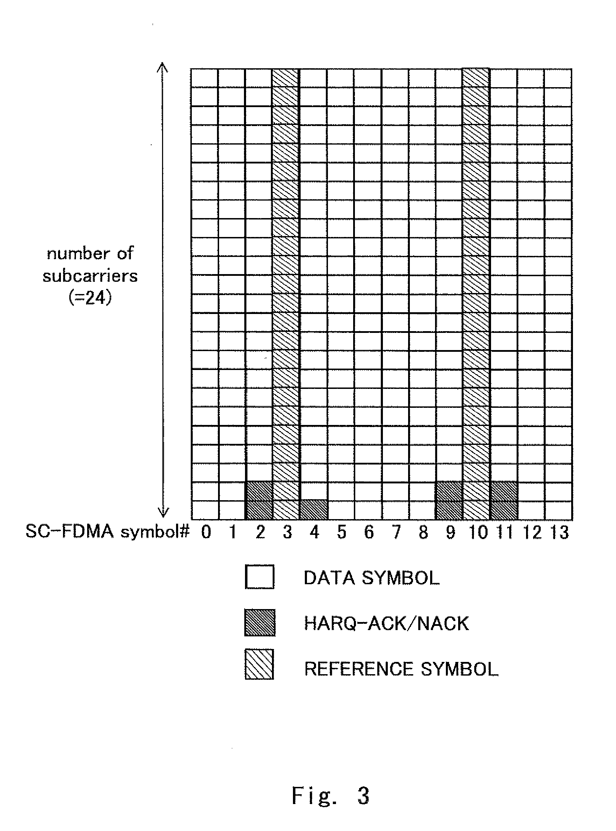

Next, multiplexing of user data and feedback control information will be described in detail. Fig. 3 shows a state in which HARQ-ACK/NACKs, user data, and reference symbols are multiplexed in a single layer. In Fig. 3, it is assumed that two transport blocks (first and second layers) will be transmitted using two multiple-input multiple-output (MIMO) antennas. According to the 3GPP Release 10, in this transmission mode, HARQ-ACK/NACKs are mapped equally onto both the first and second layers and then the resulting first and second layers are transmitted. That is, mapping of HARQ-ACK/NACKs 301 shown in Fig. 3 is common to both the first and second layers. Note that Fig. 3 only illustrates multiplexing of user data 302 and HARQ-ACK/NACKs for simplicity of explanation, and it is assumed in Fig. 3 that CQI and RI are not multiplexed in the same subframe.

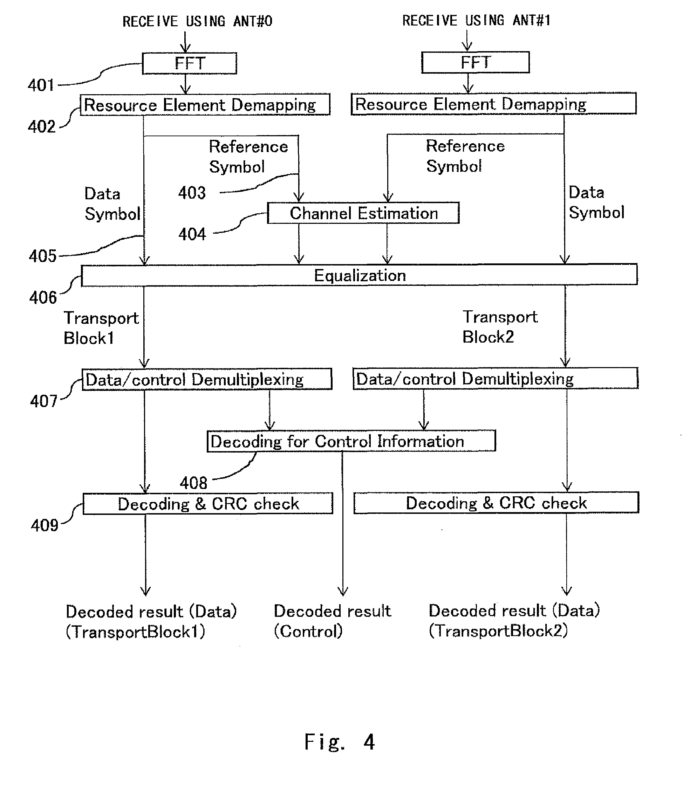

Fig. 4 shows a typical reception process. Outlined below are the steps of the reception process shown in Fig. 4. In FFT 401, a received signal sequences are subjected to fast Fourier transformation (FFT) to convert the time domain signal into a frequency domain signal. In resource element demapping 402, a resource element allocated to the user is extracted. After this, Reference Symbol 403 is transmitted to the Channel Estimation 404, Data Symbol 405 is transmitted to the Equalization 406. In channel estimation 404, the propagation path is estimated from a reference symbol 403.

In equalization 406, equalization is performed using the inputted channel estimation result and a data symbol 405 to eliminate distortion caused by the propagation path. In data/control demultiplexing 407, user data and feedback control information are separated from the equalization result. Thereafter, the feedback control information is transmitted to Decoding for Control Information 408, the user data is transmitted to a Decoding & CRC Check 409. In decoding for control information 408, the feedback control information is decoded. In decoding & CRC check 409, the user data is decoded and CRC-checked.

Patent Literature 1, in accordance with the MIMO communication standard, proposes means for selecting an appropriate transmission method when the communication quality is degrade, and transmission methods. Specifically, one transmission method is selected from among multiple multi-antenna signal transmission methods on the basis of a notification signal received from the other party of the communication, and the selected transmission method is reported to the other party. The technology of Patent Literature 1 changes the multi-antenna transmission method as appropriate so that the method matches the communication state of the other party and therefore can improve the throughput compared to systems incapable of changing the transmission method.

Further, the data transmission side specifies a multi-antenna transmission method to be used to transmit data. Patent Literature 1 also proposes a wireless transmission apparatus including means for receiving a notification signal from the other party of the communication, two or more means connected to multiple antennas and configured to convert a data sequence to be transmitted into multiple data sequences in accordance with two or more of transmission methods consisting of the MIMO multiplexing method, the MIMO diversity method, and the adaptive array antenna method, selection means for selecting at least one of the two or more means on the basis of the notification signal, and transmission means for reporting, to the other party of the communication, a transmission method corresponding to the selected means.

Patent Literature 2 proposes an apparatus for simultaneously transmitting multiple transport blocks at predetermined transmission time intervals in multiple HARQ processes. The apparatus of Patent Literature 2 determines communication quality through one or more CQI measurements. CQI may be fed back by the communication peer or can be obtained based on the channel correlation. CQI may also be expressed as an allowable modulation and coding scheme (MCS) index value or maximum transport block size.

**Citation List**

**Patent Literature**

Patent Literature 1: Japanese Unexamined Patent Application Publication No. 2010-193485
Patent Literature 2: Japanese Unexamined Patent Application Publication of PCT Application No. 2009-522870

## Summary of Invention

### Technical Problem

Typically, when multiple layers are transmitted using MIMO antennas as in the above examples, the reception quality on the receiving side varies among the transport blocks (layers). For user data, typically, the base station measures the reception quality of each transport block of the user in advance and, when the user performs scheduling, allocates an appropriate MCS to the user on the basis of the measurement results. Thus, the reception quality of each transport block can be maintained.

On the other hand, as described above, HARQ-ACK/NACKs are mapped onto all layers used by the user for transmission and then transmitted. That is, HARQ-ACK/NACKs are multiplexed with all transport blocks. In this case, reception characteristics of control information received over a propagation path which increases the differences in reception quality among the transport blocks (layers) may be influenced by layers of poor reception quality and thus degraded. In particular, errors in HARQ-ACK/NACKs affect the efficiency of the entire system operation, and transmission of HARQ-ACK/NACKs is more important than that of data. Accordingly, HARQ-ACK/NACKs have to be transmitted with higher quality than data. In this transmission system, however, HARQ-ACK/NACKs are distributed to all layers and then transmitted. Accordingly, when the reception quality significantly varies among the layers as described above, errors in HARQ-ACK/NACK are increased. This may significantly affect the system efficiency. Patent Literature 1 and Patent Literature 2 describe no solution to this problem.

Accordingly, an object of the present invention is to provide a wireless communication apparatus in which the quality of the transmission of HARQ-ACK/NACKs has to be higher in a MIMO multilayer communication system, HARQ response transmission and reception methods, and a program.

### Solution to Problem

In one aspect, a wireless communication apparatus includes a wireless communication unit and a signal processing unit. The wireless communication unit is configured to transmit multiple MIMO layers using multiple antennas. The signal processing unit maps HARQ responses onto only some layers of the MIMO layers having higher MCS, so that the HARQ responses are transmitted using the some layers.

In one aspect, a wireless communication apparatus includes a wireless communication unit and a signal processing unit. The wireless communication unit is configured to receive multiple MIMO layers using multiple antennas. The wireless communication unit is configured to preferentially perform equalization on some layers of the MIMO layers having higher MCS, and to receive HARQ responses transmitted using the some layers having the higher MCS.

In one aspect, a method is provided by which a wireless communication apparatus transmits HARQ responses, the wireless communication apparatus being configured to transmit multiple MIMO layers using multiple antennas. The method includes transmitting HARQ responses using only some layers of the MIMO layers having higher MCS.

In one aspect, a method is provided by which a wireless communication apparatus receives HARQ responses, the wireless communication apparatus being configured to receive multiple MIMO layers using multiple antennas. The method includes (a) preferentially performing equalization on layers some layers of the MIMO having higher MCS, and (b) receiving HARQ responses transmitted using the some layers having the higher MCS.

In one aspect, a program includes instructions for causing a computer to perform the above transmission method.

In one aspect, a program includes instructions for causing a computer to perform the above reception method.

### Advantageous Effects of Invention

According to the above aspects, it is possible to provide a wireless communication apparatus which can transmit HARQ responses with high quality in a MIMO multilayer communication system, HARQ response transmission and reception methods, and a program.

## Brief Description of the Drawings

Fig. 1 is a flowchart showing a transmission signal generation process in the 3GPP Release 10.
Fig. 2 is a diagram showing the configuration of an uplink subframe format in the 3GPP LTE.
Fig. 3 is a diagram showing multiplexing of user data and control information in the 3GPP Release 10.
Fig. 4 is a flowchart showing a reception process in the 3GPP Release 10.
Fig. 5 is a diagram showing an example configuration of a wireless communication system according to an embodiment of the present invention.

Fig. 6 is a diagram showing an example configuration of a mobile terminal according to the embodiment of the present invention.

Fig. 7 is a diagram showing an example configuration of a base station according to the embodiment of the present invention.

Fig. 8 is a diagram showing a specific example of symbol mapping onto a first layer (layer 0) according to the embodiment of the present invention.

Fig. 9 is a diagram showing a specific example of symbol mapping onto a second layer (layer 1) according to the embodiment of the present invention.

Fig. 10 is a diagram showing a reduction in reception latency according to the embodiment of the present invention.

**Description of Embodiments**

**First Embodiment**

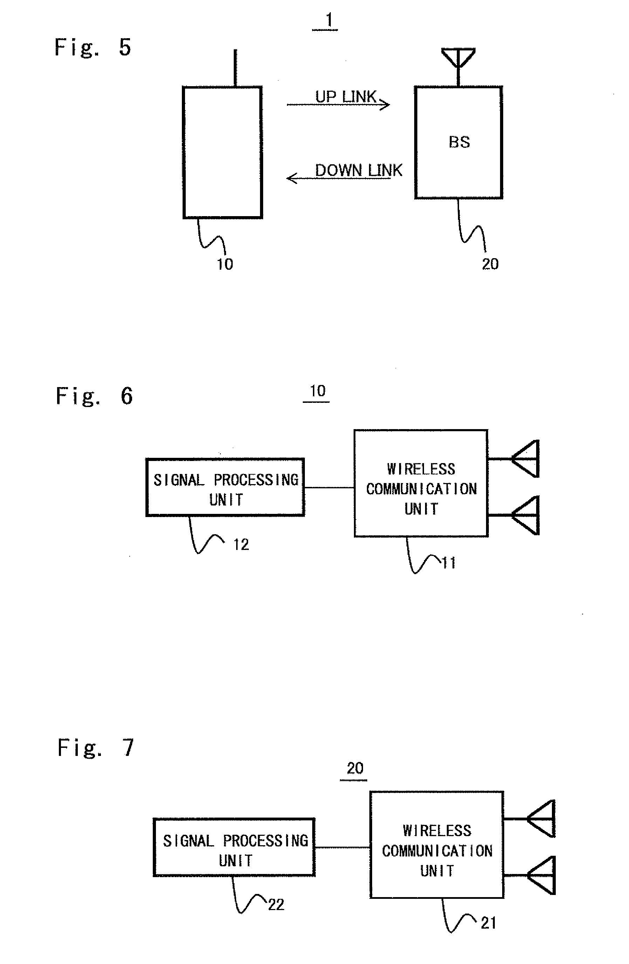

Fig. 5 is a block diagram showing an example configuration of a wireless communication system 1 according to the present embodiment. The wireless communication system 1 includes a mobile terminal 10 and a base station 20. The mobile terminal 10 communicates with base station 20 using multiple layers at least in an uplink by multiple-input multiple-output (MIMO) antennas. Fig. 6 is a block diagram showing an example configuration of the mobile terminal 10. In Fig. 6, a wireless communication unit 11 refers to a wireless transceiver and is, for example, a radio frequency (RF) unit. The wireless communication unit 11 receives a downlink signal including multiple physical downlink channels from the base station 20. The wireless communication unit 11 also transmits an uplink signal including multiple physical uplink channels to the base station 20. The wireless communication unit 11 is also configured to transmit multiple layers using multiple antennas in an uplink.

A signal processing unit 12 processes uplink signals to be transmitted through the wireless communication unit 11 and downlink signals received therethrough. Specifically, the signal processing unit 12 performs processing such as transport block generation, multiplexing, scrambling, modulation, layer mapping, precoding, and wireless resource mapping on uplink signals. In LTE where SC-OFDM is used in an uplink, for example, the signal processing unit 12 may perform the signal processing steps from transport block CRC attachment 101 to IFFT 114 illustrated in Figure 1. And the signal processing unit 12 also reconstructs reception data from a downlink signal.

The signal processing unit 12 also operates to allocate the hybrid automatic repeat request (HARQ) responses to a part of the layer, so that the HARQ responses are transmitted by using only some layers of multiple MIMO layers with a relatively high MCS. As described above, an HARQ response refers to the HARQ-ACK or the HARQ-NACK. The fact that the MCS is higher means that the transport block is larger in size or larger in the transmission bit count per symbol. And the fact that the modulation scheme of MCS is higher means that the distance between signal points on the constellation (complex plane) is shorter. And the fact that the coding scheme of MCS is higher means that the code rate is higher. In LTE, resource scheduling, including determination of uplink MCS, is performed by the base station 20. Accordingly, in LTE or similar architectures, the mobile terminal 10 may be receiving MCS notification from the base station 20. For example, in two-layer transmission (rank-2 transmission), the signal processing unit 12 transmits the HARQ responses using only one layer of the two layers with a relatively high MCS, received from the base station 20.

Fig. 7 is a block diagram showing an example configuration of the base station 20. In Fig. 7, a wireless communication unit 21 refers to a wireless transceiver and is, for example, a radio frequency (RF) unit. The wireless communication unit 21 receives an uplink signal including multiple physical uplink channels from the mobile terminal 10. And the wireless communication unit 21 transmits a downlink signal including multiple physical downlink channels to the mobile terminal 10. In addition, the wireless communication unit 21 is ,in uplink, configured to receive multiple layers using multiple antennas.

A signal processing unit 22 processes uplink signals to be transmitted through the wireless communication unit 21 and downlink signals received therethrough. And the signal processing unit 22 receives HARQ responses transmitted using layers of the multiple layers with a relatively high MCS. In LTE where SC-OFDM is used in an uplink, for example, the signal processing unit 22 only performs signal processing steps from FFT 401 to decoding & CRC check 409.

As described above, the mobile terminal 10 according to the present embodiment transmits HARQ responses using only some layers of the multiple transmission layers having higher MCS, that is, using only some higher-quality layers. Accordingly, the quality of the reception of the HARQ responses by the base station 20 is kept high compared to that in the systems defined by the 3GPP described in the background art, thus making code errors less likely to occur. This reduces the probability that an ACK may be erroneously recognized as a NACK, thus reducing the probability that unnecessary retransmission may occur.

If the multiple transmission layers have the same MCS, the mobile terminal 10 may transmit HARQ responses using only some predetermined layers. Alternatively, if the multiple transmission layers have the same MCS, the mobile terminal 10 may transmit HARQ responses using all the layers, as in the systems defined by the 3GPP described in the background art.

The mobile terminal 10 may use an MCS threshold greater than or equal to zero to evaluate the differences in MCS among the multiple transmission layers. Specifically, if the difference in MCS between first and second layers exceeds the MCS threshold, the mobile terminal 10 may transmit HARQ responses using only a layer of the first and second layers having a higher MCS. Note that the fact that the MCS threshold is zero means that no MCS threshold is used.

The MCS threshold may be reported to the mobile terminal 10 by the base station 20, for example, as system information through a notification channel or the like. Thus, the base station 20 can dynamically change the MCS threshold with ease. Alternatively, a fixed MCS threshold may be set in the wireless communication system 1. In this case, the base station 20 does not need to report the MCS threshold to the mobile terminal 10.

The wireless communication unit 21 of the base station 20 may preferentially receive the layers with a relatively high MCS, that is, the layers with which HARQ responses is transmitted. Specifically, the wireless communication unit 21 preferentially performs equalization (similar to equalization 406 in Fig. 4) on the layers of the multiple layers with a relatively high MCS, and receives the HARQ responses transmitted using the layers with a relatively high MCS. Thus, the base station 20 can receive HARQ responses faster, thus reducing the latency of HARQ responses.

HARQ response transmission and reception methods according to the present embodiment are described in detail below. In the following description, it is assumed that the wireless communication system 1 according to the present embodiment is an LTE system, and the following parameters are used.

- The size of resource block (RB) allocated: 4 [RB]
- MCS threshold information (MCS_threshold): 10
- MCS allocated to transport blocks 1 and 2: 20 (transport block 1), 1 (transport block2)

The number of resource elements (REs) allocated to data and HARQ-ACK multiplexed with the data is $4\times12\times12=576$ [RE]. The difference in MCS index value between the two transport blocks is 19 (=20-1) and is greater than or equal to the MCS threshold (MCS_Threshold = 10).

The specific modulation scheme and transport block size are as follows [reference: 3GPP TS 36.213 V10.3.0 (2011-09)].

- Transport block 1: 16QAM (modulation level $Q_m$ = 4), transport block size = 840 [bit] (i.e. CRC-added size K = 840+24 = 864)
- Transport block 2: QPSK (modulation level $Q_m$=2), transport block size = 56 [bit] (i.e. CRC-added size K = 56+24= 80)
- The number of HARQ-ACK bits, O: 2
- The amount of HARQ-ACK offset, $\beta$: 10.0

The number of REs per-antenna, Q', used to transmit HARQ-ACKs is calculated as follows [reference: 3GPP TS 36.212 V10.3.0 (2011-09)].

$$Q' = \mathrm{ceil}\ \{(2\times48\times12\times10.0)/(864 + 80)\} = \mathrm{ceil}\ (6.10) = 7$$

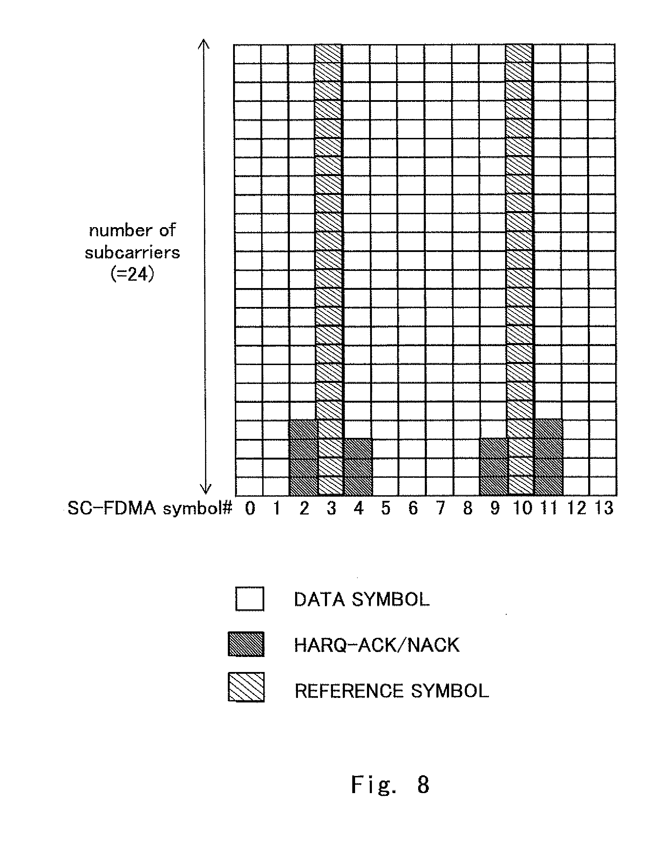

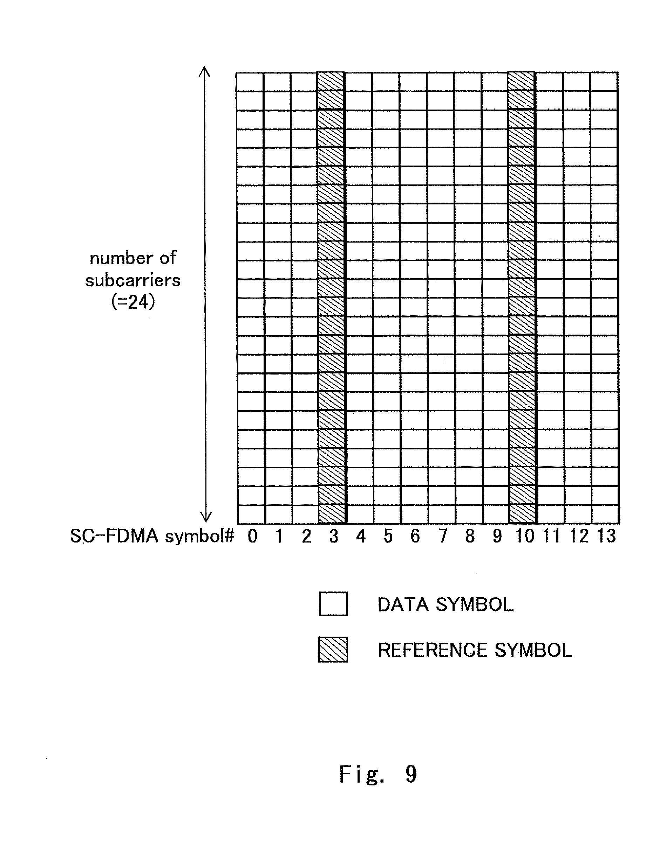

In the systems defined by the 3GPP, HARQ-ACK/NACKs of the symbol count calculated above are multiplexed with data in all transport blocks, as shown in Fig. 3, and then transmitted. On the other hand, in one example according to the present embodiment, if the difference between the MCS allocated to the transport blocks (layers) by the base station 20 exceeds the MCS threshold, the HARQ-ACK/NACKs are multiplexed in only a transport block having a higher MCS, as shown in Figs. 8 and 9, and then transmitted. Fig. 8 shows symbol mapping onto a first layer (layer 0), and Fig. 9 shows symbol mapping onto a second layer (layer 1). Since the MCS of layer 0 (Fig. 8) is higher than that of layer 1 (Fig. 9) and the difference therebetween exceeds the threshold, all the HARQ-ACK/NACKs are transmitted using layer 0.

In the systems defined by the 3GPP, the HARQ-ACK/NACKs are transmitted using 7 REs per layer $\times$ 2 layers = a total of 14 REs. In the example shown in Figs. 8 and 9, on the other hand, HARQ-ACKs are transmitted using 14 REs in the single layer (i.e. layer 0 in Fig. 8). It should be noted that the total number of REs used to transmit the HARQ-ACKs does not change while that the mapping method is changed. That is, the HARQ-ACK/NACKs are mapped onto a transport block (layer) having a higher MCS, i.e. higher quality. Thus, the reception quality of the HARQ-ACK/NACKs is kept higher than in the traditional systems, thus making errors less likely to occur. This reduces the probability that an ACK may be erroneously recognized as being a NACK, thus reducing the probability that an unnecessary retransmission may occur.

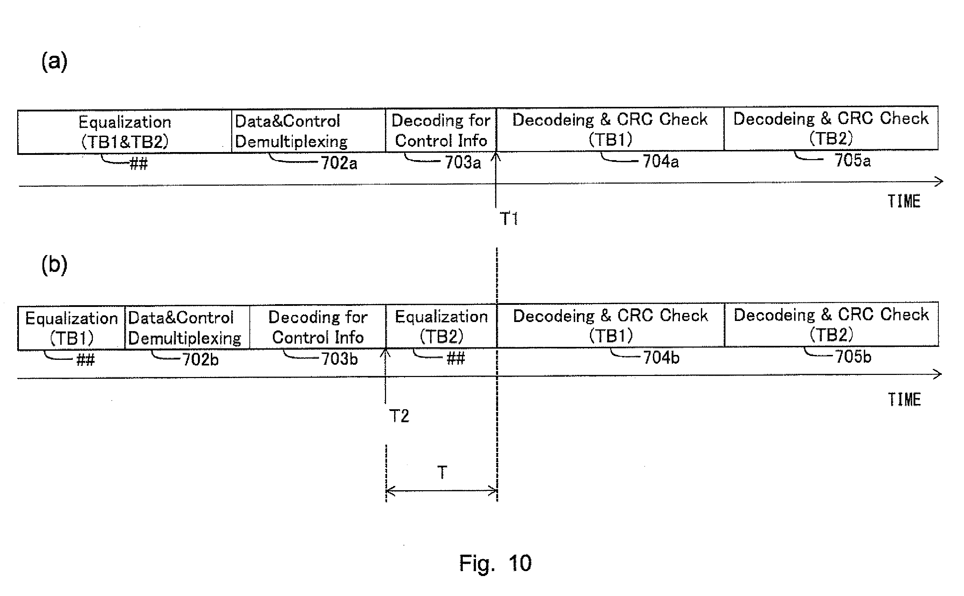

Next, a reception method which is performed by the base station 20 and which is suitable for the above transmission method will be described. As described above, the wireless communication unit 21 of the base station 20 may preferentially perform equalization on data multiplexed in a layer having a higher MCS, that is, a layer having a higher communication quality. Specifically, Fig. 10(a) shows a typical order of reception process steps, and Fig. 10(b) shows the order of reception process steps which is suitable for the present embodiment. In Fig. 10(a), equalization 701 is performed on two transport blocks and then data & control demultiplexing 702a is performed.

On the other hand, in Fig. 10(b), the base station 20 first performs equalization on a layer of a transport block on which HARQ responses (HARQ-ACK/NACKs) are mapped, then performs data & control (including HARQ responses) demultiplexing 702b on the transport block, and then performs decoding for control information (including HARQ responses) 703b. The base station 20 then performs equalization 707 on a transport block which has not yet to been processed (on which no HARQ responses are mapped) and then performs decoding (error correction) 704b, 705b on the two transport blocks. Thus, in the process of Fig. 10(b), decoding of HARQ-ACK/NACKs, which have a more rigid latency constraint than that of user data, can be completed earlier than in the process of Fig. 10(a). Specifically, the decoding results of HARQ responses are obtained at T1 in Fig. 10(a), while they are obtained at T2 in Fig. 10(b). Accordingly, in the example of Fig. 10(b), the latency of HARQ responses can be reduced by time T, which is obtained by equalization (TB2) 707 of the transport block 2.

**Other Embodiments**

The transmission signal processing performed by the mobile terminal 10, including mapping of HARQ responses, and the reception signal processing performed by the base station 20 described in the first embodiment are realized using semiconductor processing units each including an application specific integrated circuit (ASIC). These types of processing may be performed by causing a computer system including at least one processor (e.g. microprocessor, MPU, or digital signal processor (DSP)) to execute a program. Specifically, these types of processing may be performed by generating one or more programs including instructions for causing a computer system to execute an algorithm about the types of processing and then providing these programs to a computer.

These programs may be stored in various types of non-transitory computer-readable media and then provided to a computer. Such non-transitory computer-readable medium include various types of tangible storage media. Examples of the non-transitory computer-readable media include magnetic storage media (e.g. flexible disks, magnetic tapes, hard disk drives), magneto-optical storage media (e.g. magneto-optical disks), compact disc read-only memory (CD-ROM), CD-R, CD-R/W, semiconductor memory (e.g. mask ROM, programmable ROM (PROM), erasable PROM (EPROM), flash ROM, and random access memory (RAM). The programs may be provided to a computer by various types of transitory computer-readable media. Examples of such transitory computer-readable media include electric signals, optical signals, and electromagnetic waves. Such transitory computer-readable media can provide the programs for a computer through a wire communication path such as an electric line or an optical fiber, or a wireless communication path.

While an LTE system is used as a specific example of the wireless communication system 1 in the first embodiment, the first embodiment is also applicable to other wireless communication systems, for example, communication systems conforming to the 4th Generation and later communication standards (e.g. LTE-Advanced, IMT-Advanced, WiMAX2).

Further, the above embodiment is only illustrative of the application of the technical idea obtained by the present inventors. That is, the technical idea is not limited to only the above embodiment, and various changes can, of course, be made to the embodiment.

For example, part or all of the above embodiment can be described as the Supplementary Notes below, but the embodiment is not limited thereto.

(Supplementary Note 1)

A wireless communication apparatus comprising:

wireless communication means for transmitting a plurality of multiple-input multiple-output (MIMO) layers using a plurality of antennas; and
signal processing means for mapping hybrid automatic repeat request (HARQ) responses onto some layers of the MIMO layers with a relatively high modulation and coding scheme (MCS), so that the HARQ responses are transmitted using only the some layers.

(Supplementary Note 2)

The wireless communication apparatus according to Supplementary Note 1, wherein each of the some layers comprise a layer having the largest of transport block sizes determined based on the MCS.

(Supplementary Note 3)

The wireless communication apparatus according to Supplementary Note 1 or 2, wherein the signal processing means determines the some layers on the basis of the MCS of the some layers.

(Supplementary Note 4)

The wireless communication apparatus according to Supplementary Note 3,
wherein the some layers comprise first and second layers, and
wherein if a difference in MCS or transport block size between the first and second layers exceeds a predetermined threshold, the signal processing means determines, as each of the some layers, a layer of the first and second layers having a higher MCS index value or larger transport block size.

(Supplementary Note 5)

The wireless communication apparatus according to Supplementary Note 4, wherein the threshold is a value greater than zero.

(Supplementary Note 6)

The wireless communication apparatus of any one of Supplementary Notes 1 to 5,
wherein the wireless communication apparatus is a mobile terminal, and
wherein the MCS are reported to the mobile terminal by a base station that receives the layers transmitted by the mobile terminal.

(Supplementary Note 7)

The wireless communication apparatus according to Supplementary Note 6, wherein the signal processing means receives the threshold from the base station.

(Supplementary Note 8)

A wireless communication apparatus comprising:

   wireless communication means for receiving a plurality of multiple-input multiple-output (MIMO) layers using a plurality of antennas; and
   signal processing means for preferentially performing equalization on layers of the MIMO layers with a relatively high modulation and coding scheme (MCS), and receiving hybrid automatic repeat request (HARQ) responses transmitted by using the layers with a relatively high MCS.

(Supplementary Note 9)

The wireless communication apparatus according to Supplementary Note 8, wherein the signal processing means reports, to an apparatus that transmits a plurality of layers and serves as the other end of communication, modulation and coding scheme (MCS) of the layers.

(Supplementary Note 10)

The wireless communication apparatus according to Supplementary Note 9,
wherein the wireless communication apparatus is a base station, and
wherein the apparatus serving as the other end of the communication is a mobile terminal.

(Supplementary Note 11)

A method by which a wireless communication apparatus transmits hybrid automatic repeat request (HARQ) responses, the wireless communication apparatus being configured to transmit a plurality of multiple-input multiple-output (MIMO) layers using a plurality of antennas, the method comprising transmitting HARQ responses using only some layers of the MIMO layers with relatively high modulation and coding scheme (MCS).

(Supplementary Note 12)

The method according to Supplementary Note 11, wherein the some layers comprise a layer having the largest of transport block sizes determined based on the MCS.

(Supplementary Note 13)

The method according to Supplementary Note 11 or 12, wherein the some layers are determined based on the MCS of the layers.

(Supplementary Note 14)

The method according to Supplementary Note 13,
wherein the layers comprise first and second layers, and
wherein the determining comprises if a difference in MCS index value or transport block size per symbol between the first and second layers exceeds a predetermined threshold, a layer having a higher MCS index value or larger transport block size, of the first and second layers is determined as the some layers.

(Supplementary Note 15)

The method according to Supplementary Note 14, wherein the threshold is a value greater than zero.

(Supplementary Note 16)

The method according to any one of Supplementary Notes 11 to 15,
wherein the wireless communication apparatus is a mobile terminal, and
wherein the MCS are reported to the mobile terminal by a base station that receives the layers transmitted by the mobile terminal.

(Supplementary Note 17)

The method according to Supplementary Note 16, further comprising receiving the threshold from the base station.

(Supplementary Note 18)

A method by which a wireless communication apparatus receives hybrid automatic repeat request (HARQ) responses, the wireless communication apparatus being configured to receive a plurality of multiple-input multiple-output (MIMO) layers using a plurality of antennas, the method comprising:

preferentially performing equalization on layers of the MIMO layers with a relatively high modulation and coding scheme (MCS); and
receiving HARQ responses transmitted using the layers with relatively high MCS.

(Supplementary Note 19)

The method according to Supplementary Note 18, further comprising reporting, to an apparatus that transmits a plurality of layers and serves as the other end of communication, modulation and coding scheme (MCS) of the layers.

(Supplementary Note 20)

A non-transitory computer-readable medium for causing a computer to perform a method by which a wireless communication apparatus transmits hybrid automatic repeat request (HARQ) responses, the wireless communication apparatus being configured to transmit a plurality of multiple-input multiple-output (MIMO) layers using a plurality of antennas, the method comprising transmitting HARQ responses using only some layers having higher modulation and coding scheme (MCS), of the layers.

(Supplementary Note 21)

A non-transitory computer-readable medium for causing a computer to perform a method by which a wireless communication apparatus receives hybrid automatic repeat request (HARQ) responses, the wireless communication apparatus being configured to receive a plurality of multiple-input multiple-output (MIMO) layers using a plurality of antennas, the method comprising:

preferentially performing equalization on layers having higher modulation and coding scheme (MCS), of the layers; and

receiving HARQ responses transmitted using the layers having the MCS.

While the invention of the present application has been described with reference to the embodiment, the invention is not limited thereto. Various changes understandable by those skilled in the art can be made to the configuration or details of the invention of the present application without departing from the scope of the invention.

The present application claims priority based on Japanese Patent Application No. 2012-169094, filed on Jul. 31, 2012, the disclosure of which is incorporated herein in its entirety.

**Reference Signs List**

| | |
|---|---|
| 1 | wireless communication system |
| 10 | mobile terminal |
| 11 | wireless communication unit |
| 12 | signal processing unit |
| 20 | base station |
| 21 | wireless communication unit |
| 22 | signal processing unit |
| 101 | transport block CRC attachment |
| 102 | code block segmentation |
| 103 | code block CRC attachment |
| 104 | turbo coding & rate matching |
| 105 | code block concatenation |
| 106 | coding for HARQ-ACK |
| 107 | data & control multiplexing |
| 108 | channel interleaver |
| 109 | scrambling |
| 110 | modulation |
| 111 | layer mapping |
| 112 | precoding |
| 113 | resource element mapping |
| 114 | IFFT |
| 115 | user data unit |
| 116 | control information unit |
| 201 | SC-FDMA symbol |
| 401 | FFT |
| 402 | resource element demapping |
| 403 | reference symbol |
| 404 | channel estimation |
| 405 | data symbol |
| 406 | equalization |
| 407 | data/control demultiplexing |
| 408 | decoding for control information |
| 409 | decoding & CRC check |
| 701 | equalization (TB1 & TB2) |
| 702a | data & control demultiplexing |
| 702b | data & control demultiplexing |
| 703a | decoding for control info |

703b    decoding for control info
704a    decoding & CRC check (TB1)
704b    decoding & CRC check (TB1)
705a    decoding & CRC check (TB2)
705b    decoding & CRC check (TB1)
706     equalization (TB1)
707     equalization (TB2)

**Claims**

1.  A wireless communication apparatus comprising:

    wireless communication means for transmitting a plurality of multiple-input multiple-output (MIMO) layers using a plurality of antennas; and
    signal processing means for mapping hybrid automatic repeat request (HARQ) responses onto some layers of the MIMO layers with a relatively high modulation and coding scheme (MCS), so that the HARQ responses are transmitted using only the some layers.

2.  The wireless communication apparatus according to claim 1, wherein each of the some layers comprise a layer having the largest of transport block sizes determined based on the MCS.

3.  The wireless communication apparatus according to claim 1 or 2, wherein the signal processing means determines the some layers on the basis of the MCS of the some layers.

4.  The wireless communication apparatus according to claim 3, wherein the some layers comprise first and second layers, and wherein if a difference in MCS or transport block size between the first and second layers exceeds a predetermined threshold, the signal processing means determines, as each of the some layers, a layer of the first and second layers having a higher MCS index value or larger transport block size.

5.  The wireless communication apparatus according to claim 4, wherein the threshold is a value greater than zero.

6.  The wireless communication apparatus of any one of claims 1 to 5,
    wherein the wireless communication apparatus is a mobile terminal, and
    wherein the MCS are reported to the mobile terminal by a base station that receives the layers transmitted by the mobile terminal.

7.  The wireless communication apparatus according to claim 6, wherein the signal processing means receives the threshold from the base station.

8.  A wireless communication apparatus comprising:

    wireless communication means for receiving a plurality of multiple-input multiple-output (MIMO) layers using a plurality of antennas; and
    signal processing means for preferentially performing equalization on layers of the MIMO layers with a relatively high modulation and coding scheme (MCS), and receiving hybrid automatic repeat request (HARQ) responses transmitted by using the layers with a relatively high MCS.

9.  A method by which a wireless communication apparatus transmits hybrid automatic repeat request (HARQ) responses, the wireless communication apparatus being configured to transmit a plurality of multiple-input multiple-output (MIMO) layers using a plurality of antennas, the method comprising transmitting HARQ responses using only some layers of the MIMO layers with relatively high modulation and coding scheme (MCS).

10. A method by which a wireless communication apparatus receives hybrid automatic repeat request (HARQ) responses, the wireless communication apparatus being configured to receive a plurality of multiple-input multiple-output (MIMO) layers using a plurality of antennas, the method comprising:

    preferentially performing equalization on layers of the MIMO layers with a relatively high modulation and coding scheme (MCS); and
receiving HARQ responses transmitted using the layers with relatively high MCS.

Fig. 1

1TTI (=1[ms])

| Data Symbol #0 | Data Symbol #1 | Data Symbol #2 | Reference symbol #0 | Data Symbol #3 | Data Symbol #4 | Data Symbol #5 | Data Symbol #6 | Data Symbol #7 | Data Symbol #8 | Reference symbol #1 | Data Symbol #9 | Data Symbol #10 | Data Symbol #11 |

201

71.4[us]

Fig. 2

number of
subcarriers
(=24)

SC-FDMA symbol#  0  1  2  3  4  5  6  7  8  9  10 11 12 13

☐ DATA SYMBOL

▨ HARQ-ACK/NACK

▨ REFERENCE SYMBOL

Fig. 3

RECEIVE USING ANT#0          RECEIVE USING ANT#1

401 — | FFT |                          | FFT |

402 — | Resource Element Demapping |   | Resource Element Demapping |

Reference                        Reference
Symbol                           Symbol

Data        403 —                               Data
Symbol                                          Symbol
            | Channel Estimation |

404 —

405 —

406 — | Equalization |

Transport                                       Transport
Block1                                          Block2

407 — | Data/control Demultiplexing |   | Data/control Demultiplexing |

| Decoding for Control Information |

408 —

409 — | Decoding & CRC check |        | Decoding & CRC check |

Decoded result (Data)     Decoded result     Decoded result (Data)
(TransportBlock1)         (Control)          (TransportBlock2)

Fig. 4

EP 2 882 124 A1

Fig. 5

1

UP LINK →

← DOWN LINK

BS

10          20

Fig. 6

10

SIGNAL PROCESSING UNIT

WIRELESS COMMUNICATION UNIT

12          11

Fig. 7

20

SIGNAL PROCESSING UNIT

WIRELESS COMMUNICATION UNIT

22          21

number of
subcarriers
(=24)

SC-FDMA symbol#  0  1  2  3  4  5  6  7  8  9  10  11  12  13

☐  DATA SYMBOL

▨  HARQ-ACK/NACK

▨  REFERENCE SYMBOL

Fig. 8

number of
subcarriers
(=24)

SC-FDMA symbol# 0 1 2 3 4 5 6 7 8 9 10 11 12 13

☐ DATA SYMBOL

▨ REFERENCE SYMBOL

Fig. 9

(a)

| Equalization (TB1&TB2) | Data&Control Demultiplexing | Decoding for Control Info | Decodeing & CRC Check (TB1) | Decodeing & CRC Check (TB2) |
|---|---|---|---|---|
| ##  | 702a | 703a | 704a | 705a |

TIME

T1

(b)

| Equalization (TB1) | Data&Control Demultiplexing | Decoding for Control Info | Equalization (TB2) | Decodeing & CRC Check (TB1) | Decodeing & CRC Check (TB2) |
|---|---|---|---|---|---|
| ## | 702b | 703b | ## | 704b | 705b |

TIME

T2

T

Fig. 10

## INTERNATIONAL SEARCH REPORT

| International application No. |
| --- |
| PCT/JP2013/002414 |

**A. CLASSIFICATION OF SUBJECT MATTER**
*H04J99/00*(2009.01)i, *H04B7/04*(2006.01)i, *H04W16/28*(2009.01)i, *H04W28/04* (2009.01)i

According to International Patent Classification (IPC) or to both national classification and IPC

**B. FIELDS SEARCHED**

Minimum documentation searched (classification system followed by classification symbols)
H04J99/00, H04B7/04, H04W16/28, H04W28/04

Documentation searched other than minimum documentation to the extent that such documents are included in the fields searched

| | | | |
| --- | --- | --- | --- |
| Jitsuyo Shinan Koho | 1922–1996 | Jitsuyo Shinan Toroku Koho | 1996–2013 |
| Kokai Jitsuyo Shinan Koho | 1971–2013 | Toroku Jitsuyo Shinan Koho | 1994–2013 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>Y | WO 2011/099282 A1 (Panasonic Corp.),<br>18 August 2011 (18.08.2011),<br>paragraph [0118]<br>& US 2012/0288025 A1   & EP 2536052 A1<br>& CN 102725984 A   & MX 2012008237 A<br>& KR 10-2012-0125262 A   & TW 201212566 A | 1,3-7,9<br>2,8,10 |
| X<br>Y | WO 2010/107779 A2 (INTERDIGITAL PATENT<br>HOLDINGS, INC.),<br>23 September 2010 (23.09.2010),<br>paragraph [0108]<br>& JP 2012-521166 A   & US 2010/0239040 A1<br>& EP 2409421 A   & CN 102356564 A<br>& KR 10-2013-0012083 A   & AR 75856 A<br>& TW 201126942 A   & KR 10-2011-0132598 A | 1,3-7,9<br>2,8,10 |

☒   Further documents are listed in the continuation of Box C.     ☐   See patent family annex.

| | |
| --- | --- |
| \*   Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search<br>23 May, 2013 (23.05.13) | Date of mailing of the international search report<br>04 June, 2013 (04.06.13) |
| --- | --- |
| Name and mailing address of the ISA/<br>    Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2013/002414

C (Continuation).   DOCUMENTS CONSIDERED TO BE RELEVANT

| Category* | Citation of document, with indication, where appropriate, of the relevant passages | Relevant to claim No. |
|---|---|---|
| Y | CATT, CMCC, Motorola, Nokia, NSN, RITT, To reuse the TBS tables for punctured PRB [online], 3GPP TSG-RAN WG1#54b R1-083947, Internet <URL:http://www.3gpp.org/ftp/tsg_ran/ WG1_RL1/TSGR1_54b/Docs/R1-083947.zip>, 2008.09 | 2 |
| Y | US 2007/0162827 A1  (QUALCOMM Inc.), 12 July 2007 (12.07.2007), paragraph [0077] & JP 2009-523373 A      & EP 1982486 A & EP 2009860 A1          & EP 2009861 A1 & WO 2007/082240 A2      & CA 2635397 A & KR 10-2008-0093043 A  & RU 2008132820 A & TW 200803232 A        & CA 2762126 A & CA 2762235 A          & KR 10-2012-0008095 A | 8,10 |
| Y | WO 2006/059678 A1  (Panasonic Corp.), 08 June 2006 (08.06.2006), paragraph [0058] & CN 1783747 A | 8,10 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010193485 A
- JP 2009522870 W

- JP 2012169094 A

**Non-patent literature cited in the description**

- *3GPP TS 36.213 V10.3.0,* September 2011

- *3GPP TS 36.212 V10.3.0,* September 2011